Europäisches Patentamt

**European Patent Office**

Office européen des brevets

(19)

(11) Numéro de publication: **0 006 806**
**B1**

(12) **FASCICULE DE BREVET EUROPEEN**

(45) Date de publication du fascicule du brevet: **14.04.82**

(51) Int. Cl.³: **B 23 B 31/20**, B 23 B 31/00

(21) Numéro de dépôt: **79400408.5**

(22) Date de dépôt: **19.06.79**

(54) Dispositif de serrage pour l'usinage simultané des deux extrémités d'une pièce.

(30) Priorité: **30.06.78 FR 7819632**

(43) Date de publication de la demande:
**09.01.80 Bulletin 80/1**

(45) Mention de la délivrance du brevet:
**14.04.82 Bulletin 82/15**

(84) Etats contractants désignés:
**AT BE CH DE GB IT LU NL SE**

(56) Documents cités:
**CH - A - 347 696**
**DE - A - 1 552 455**
**DE - A - 1 752 599**
**FR - A - 1 504 212**
**FR - A - 2 188 469**
**GB - A - 1 035 395**
**US - A - 4 032 162**

(73) Titulaire: **RAMO S.A. Société anonyme dite:**
**21, rue Henri Gélin**
**F-79006 Niort Cedex (FR)**

(72) Inventeur: **Champeau, Marcel**
**41, rue de la Recouvrance**
**F-79000 Niort (FR)**
Inventeur: **Tabutin, André**
**5 Avenue du Saut de Loup Résidence Beauregard**
**F-78170 La Celle St-Cloud (FR)**

(74) Mandataire: **Moulines, Pierre et al,**
**Cabinet BEAU de LOMENIE 55, rue d'Amsterdam**
**F-75008 Paris (FR)**

Courier Press, Leamington Spa, England.

## Dispositif de serrage pour l'usinage simultané des deux extrémités d'une pièce

La présente invention concerne un dispositif de serrage pour l'usinage simultané des deux extrémités d'une pièce.

Pour procéder à l'usinage, notamment au tournage simultané des deux extrémités d'une pièce, celle-ci est maintenue serrée dans une broche tournante, montée dans une poupée fixe disposée au milieu du banc d'un tour.

Ce dernier est muni de deux chariots copieurs disposés de part et d'autre de la poupée fixe et qui se déplacent chacun au cours de leur avance de travail en direction de l'extrémité respective de la broche. Cette disposition permet l'usinage simultané ou différentiel des deux extrémités d'une pièce cylindrique montée et serrée dans la broche tubulaire. L'usinage peut être effectué à l'intérieur de l'une ou de l'autre (ou des deux) des extrémités d'une pièce creuse.

Dans ce cas, la longueur de la pièce à usiner doit être égale ou supérieure à la longueur de la broche. Il est possible d'usiner l'extérieur de l'une ou les deux extrémités de la pièce, la partie dépassante à chaque extrémité de la broche étant fonction de la longueur à usiner.

La pièce peut être placée manuellement dans la broche et positionnée longitudinalement par une butée fixe ou escamotable, puis serrée. On peut également prévoir une alimentation automatique qui positionne la pièce avant serrage et l'éjecte après usinage et desserrage. Pour assurer le serrage de la pièce dans la poupée, il est connu d'utiliser un dispositif comprenant une broche tubulaire, rotative, munie intérieurement de deux pistons annulaires coulissant axialement et agissant sur deux pinces présentant une partie conique coopérant avec une partie conique correspondante de deux pièces solidaires de la broche, lesdites pinces placées aux extrémités de la broche recevant la pièce à usiner.

On connaît le brevet CH‑A‑347.696 qui concerne un dispositif de serrage de ce type dans lequel est montée rotative une broche tubulaire comportant intérieurement deux pistons annulaires coulissant axialement et agissant respectivement sur deux pinces de serrage de la pièce à usiner disposées aux deux extrémités de la broche, lesdites pinces de serrage qui sont montées respectivement dans les deux pistons présentant une partie conique coopérant avec une partie conique correspondante des pistons, lesdites pinces étant en appui d'un côté contre les couvercles solidaires de la broche par une face conique s'étendant radialement. Un manchon de guidage est disposé entre les pinces mais à une certaine distance de celles-ci de telle sorte qu'il n'y a aucun contact entre les pinces et le manchon de guidage. On connaît également le brevet US‑A‑4.032.162 qui concerne un dispositif de serrage d'une pièce par sa partie centrale dans lequel les pinces présentent une partie conique et une partie cylindrique. Toutefois, les deux pinces sont en contact directement par leur partie cylindrique et ne comportent pas de manchon ou de douille entre les pinces. Cette disposition ne peut convenir que dans des cas où la pièce à serrer est relativement courte et elle ne peut être utilisée pour des pièces assez longues.

De tels dispositifs ne donnent pas entière satisfaction en ce qui concerne la mise en place de la pièce à usiner dans les pinces et la présente invention a pour objet de remédier à cet inconvénient.

Conformément à la présente invention, les pinces présentent en outre une partie cylindrique et la douille constitue une entretoise contre les extrémités de laquelle viennent en butée en position desserrée les parties cylindriques des pinces qui sont centrées dans l'alésage des pistons de manière à assurer un guidage et un positionnement de la pièce dans les pinces.

Cette disposition suivant l'invention a pour but d'éviter le jeu longitudinal des pinces pendant la période de desserrage et en particulier de faciliter l'introduction de la pièce à usiner dans la broche au moyen d'un poussoir escamotable d'un dispositif d'alimentation automatique.

La disposition des pinces et leur profil permet d'obtenir le serrage de la pièce sans déplacement longitudinal de cette dernière, alors que, dans la plupart des serrages par pinces de type connu, la pièce peut glisser lors du serrage. D'autre part, les pistons sont actionnés dans les deux sens correspondant au serrage et au desserrage des pinces par une poussée du fluide hydraulique qui peut s'inverser sous l'action des organes de commande d'un circuit de fluide hydraulique.

Dans un tour à cycles automatiques et en particulier avec une alimentation automatique des pièces, il est nécessaire d'obtenir des informations concernant la position des pinces en position desserrée, pour opérer le déchargement de la pièce qui vient d'être usinée, puis le chargement de la pièce brute et son positionnement par des butées escamotables. Ce point précis étant obtenu, on effectue le serrage de la pièce et l'on escamote les butées. L'information concernant le serrage autorise le départ du cycle d'usinage.

Suivant une autre caractéristique de l'invention, à chaque extrémité de la broche est disposé un moyen de détection des positions de serrage et de desserrage des pinces.

Les informations de ces moyens de détection sont transmises sélectivement aux relais de programmation du cycle de fonctionnement du tour. D'autres caractéristiques et avantages de l'invention seront mieux compris à la lecture de la description qui va suivre de plusieurs exemples de réalisation, et en se référant aux dessins annexés dans lesquels:

la figure 1 est une vue en élévation d'un tour comportant une poupée centrale et deux chariots porte-outils de copiage;

la figure 2 est une vue en coupe longitudinale suivant la ligne II—II de la figure 1 du dispositif de serrage suivant l'invention, lorsque la pièce est serrée;

la figure 3 est une vue en coupe du dispositif identique à celle de la figure 2 lorsque la pièce est en position desserrée;

la figure 4 est une vue en coupe suivant l'axe IV—IV de la figure 2, montrant la valve d'inversion commandant le serrage et le desserrage de la pièce;

la figure 5 est un schéma du circuit hydraulique de commande;

la figure 6 est une vue en coupe longitudinale, montrant le dispositif de détection avec l'écran de détection de serrage en fonctionnement;

la figure 7 est une vue en coupe suivant la ligne VII—VII de la figure 6;

la figure 8 est une vue en coupe suivant l'axe VIII—VIII de la figure 3, montrant le dispositif de détection avec l'écran de détection de desserrage en fonctionnement;

la figure 9 est une vue en coupe suivant la ligne IX—IX de la figure 8.

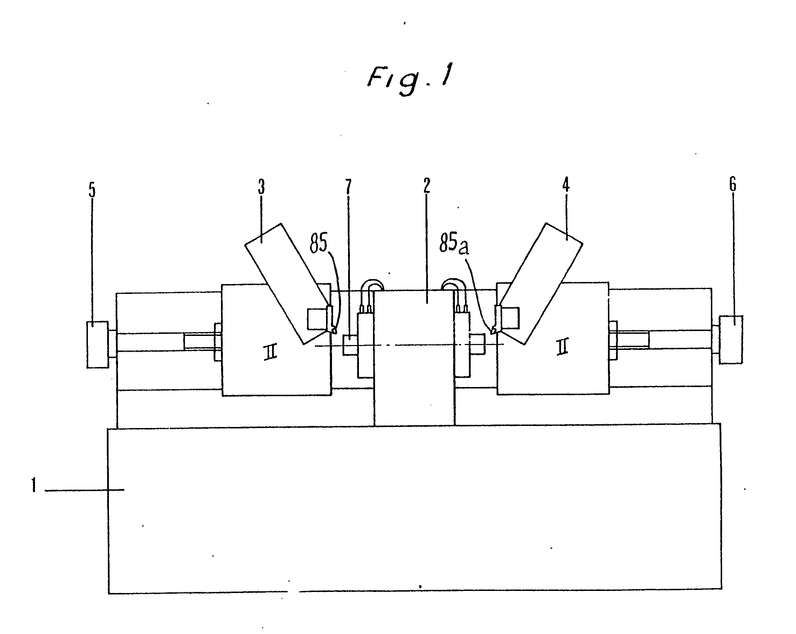

A la figure 1, on a représente un banc de tour 1 sur lequel est montée dans sa partie centrale une poupée 2 comportant une broche rotative dans lequel est maintenue serrée une pièce 7 qui est usinée à ses deux extrémités au moyen d'outils 85, 85a fixés sur deux chariots de copiage 3 et 4 montés coulissants sur le bâti de la machine de part et d'autre de la poupée 2. Ces chariots et leurs moteurs de commande 5 et 6 sont d'un type connu, la liaison entre ces derniers et les chariots respectifs étant assurée par des vis et des écrous. L'usinage de la pièce 7 peut s'effectuer d'une manière simultanée ou indépendante, pour chacune des extrémités de celle-ci. Il est possible de réaliser un usinage extérieur ou intérieur de la pièce 7 indépendamment pour chaque extrémité ou de manière identique pour les deux extrémités.

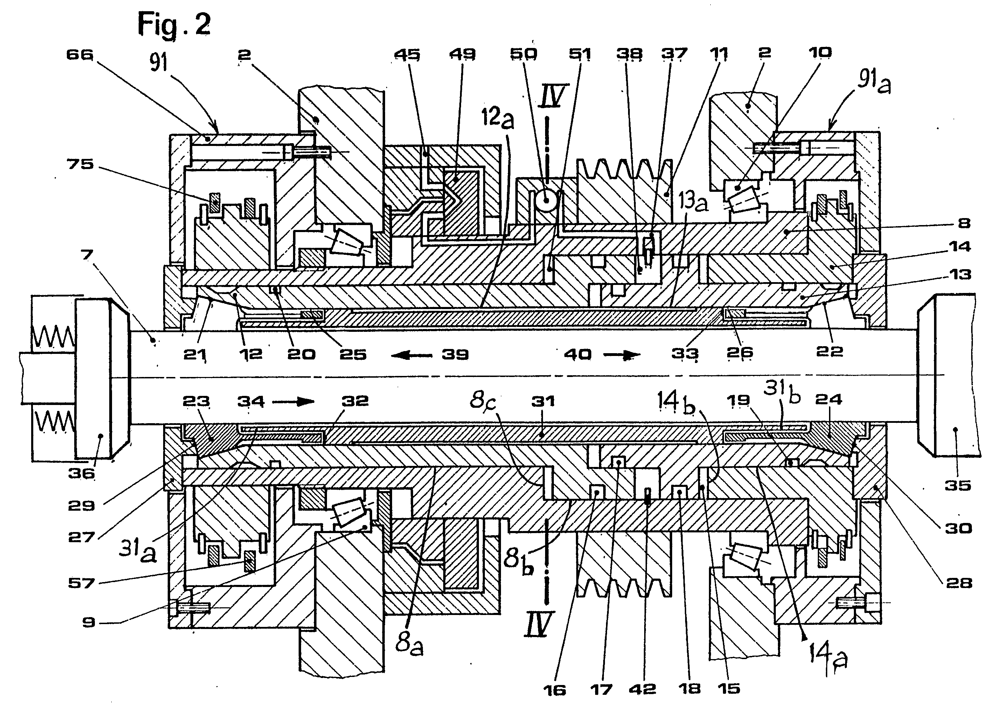

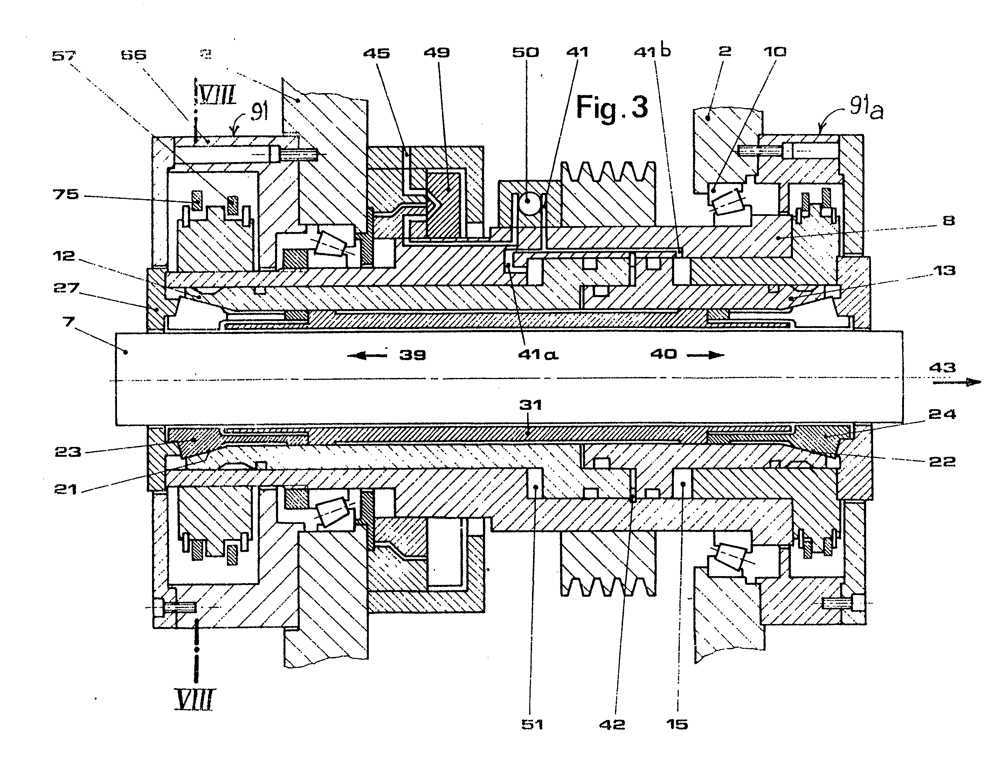

Aux figures 2 et 3 on a représenté le dispositif de serrage de la pièce 7 qui est monté dans la poupée 2. Dans la boîtier de la poupée 2 est montée rotative, au moyen de paliers à roulement 9 et 10, une broche 8 entraînée en rotation par un organe moteur et un moyen de transmission non représentés au dessin, et reliés à une poulie 11 solidaire de la broche 8.

La broche 8 présente des alésages étagés 8a et 8b dans lesquels est monté, coulissant d'un côté, un piston annulaire 12, l'alésage 8b recevant à l'une de ses extrémités une douille 14 solidaire de la broche.

De l'autre côté, est monté, coulissant dans l'alésage 8b de la broche 8 et dans l'alésage 14a de la douille 14, un deuxième piston annulaire 13.

Ces deux pistons 12 et 13 sont munis de joints d'étanchéité 16, 17, 18 qui sont destines à isoler les différentes chambres destinées à recevoir le fluide hydraulique et de joints 19 et 20 montés respectivement à l'extrémité de chaque piston.

Entre les pistons 12 et 13 est ménagée une chambre centrale 38 alimentée en fluide hydraulique par un conduit 37 relié à un circuit hydraulique qui sera décrit plus loin, ladite chambre 38 commune aux deux pistons 12 et 13 a pour effet lorsqu'elle est alimentée en fluide sous pression d'éloigner l'un de l'autre lesdits pistons 12 et 13 qui se déplacent respectivement suivant les flèches 39 et 40.

Entre le piston 12 et le fond 8c de l'alésage 8b est ménagée une chambre latérale 51 reliée au circuit hydraulique par un conduit 41a (figure 3), alors qu'une deuxième chambre latérale 15 est ménagée entre le piston 13 et une face 14b de la douille 14 reliée au circuit par un conduit 41b. Lorsque les deux chambres 51 et 15 sont alimentées simultanément en fluide hydraulique, par les conduits 41a et 41b reliés au conduit 41, les deux pistons sont repoussés l'un vers l'autre dans le sens inverse des flèches 39 et 40, leur course étant limitée par un organe de butée constitué par un circlips 42 disposé dans la chambre centrale 38.

Les pistons annulaires 12 et 13 présentent à leur extrémité et en regard de chaque extrémité de la broche 8, un cône femelle 21 et 22. Ces cônes reçoivent des parties coniques correspondantes de pinces 23, 24 qui présentent des parties cylindriques 25 et 26 centrées dans l'alésage des pistons 12 et 13.

Les pinces 23 et 24 sont en partie fendues longitudinalement de façon connue, afin de permettre à leur alésage de diminuer de diamètre et de serrer la pièce à usiner 7 qui est engagée dans les pinces 23 et 24.

Aux deux extrémités de la broche 8 sont fixés des couvercles 27 et 28 qui présentent des faces radiales légèrement coniques 29 et 30 en contact étroit avec des faces correspondantes des pinces 23 et 24 de manière à maintenir en place longitudinalement, lesdites pinces par rapport à la broche 8.

A l'intérieur des alésages 12a et 13a des pistons 12 et 13 est disposée une douille 31 formant entretoise contre les extrémité de laquelle sont susceptibles de venir en appui des extrémités 32 et 33 des pinces 23 et 24.

Cette disposition a pour but d'éviter le jeu longitudinal des pinces pendant la période de desserrage et en particulier pour faciliter l'introduction de la pièce 7 dans le sens de la flèche 34 au moyen d'un poussoir à ressort escamotable 36 d'un dispositif d'alimentation automatique comportant une butée escamotable 35 positionnant la pièce 7 avant serrage.

Cette disposition présente une caractéristique importante de l'invention par le fait que les pinces 23 et 24 entretoisées par la douille 31 entre les couvercles 27 et 28 permettent le serrage de la pièce 7, sans aucun déplacement longitudinal de cette dernière pendant de déplacement des pistons 12 et 13 dans le sens des flèches 39 et 40 ainsi que dans le sens inverse.

La douille 31 est prolongée à ses deux extrémités par des collerettes 31a, 31b qui sont engagées avec un certain jeu dans des chambrages correspondants prévus sur la circonférence intérieure des pinces 23, 24. La présence d'un certain jeu entre les collerettes et les chambrages permet les déplacements axiaux et radiaux de la partie cylindrique 25, 26 des pinces.

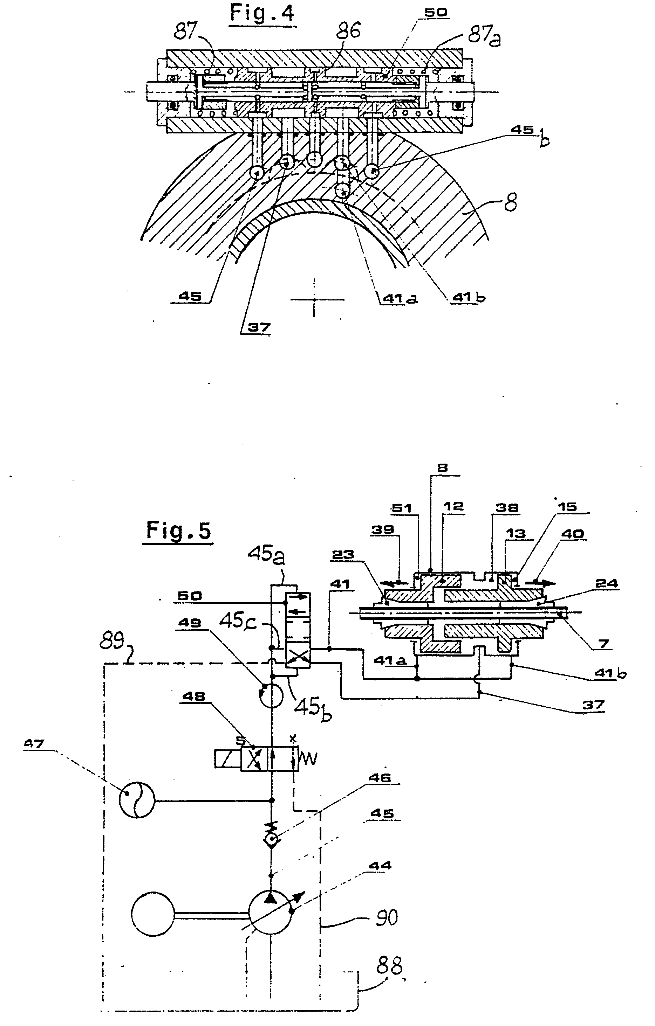

A la figure 5 on a représenté un mode de réalisation du circuit hydraulique de commande des pistons 12 et 13 qui comprend une bâche d'alimentation en fluide hydraulique 88 reliée à une pompe 44 dont le conduit de refoulement 45 qui est muni d'un clapet anti-retour 46 alimente un accumulateur de pression 47 de sécurité.

Sur le conduit d'alimentation 45 est branché également, un distributeur 48 qui, par l'intermédiaire d'un joint rotatif 49 disposé entre le boîtier de la poupée 2 et la broche 8, (figures 2 et 3) alimente à travers une valve d'inversion 50 fixée sur la broche 8 (figure 4) les chambres 38, 51 et 15 des pistons 12 et 13 par les conduits 37 et 41.

· La valve d'inversion 50 (figure 4) qui est d'un type connu comportant un tiroir 86 soumis, de part et d'autre, à l'action de ressorts 87, 87a, ne sera pas décrite plus en détail du fait qu'elle est représentée schématiquement à la figure 5.

Le dispositif suivant l'invention fonctionne de la manière suivante:

Dans la position représentée au dessin, le distributeur 48 assure le passage du fluide dans le conduit 45 qui agit sur le tiroir 86 de la valve 50 dans le sens du serrage de la pince, le conduit 45c étant relié au conduit 37 qui aboutit à la chambre 38 et le conduit 41 étant relié au conduit 89 de retour à la bâche 88.

Il en résulte du fait de la présence du fluide sous pression dans la chambre 38, un déplacement des pistons 12 et 13 suivant les flèches 39 et 40. Lors du déplacement de chacun des pistons 12 et 13 (figure 2), les cônes femelles 21 et 22 entrent respectivement en contact avec les cônes mâles correspondants des pinces 23 et 24 qui se déforment radialement du fait qu'elles sont en appui contre les faces coniques 29 et 30 des couvercles 27, 28 et il en résulte un resserrement de leur alésage sur la pièce 7 qui est ainsi solidarisée dans le sens longitudinal et en rotation avec la broche 8.

Si on actionne le distributeur 48 qui passe dan l'autre position, l'alimentation par le conduit 45 est interrompue, le fluide provenant de la pompe retournant à la bâche par le conduit 90 et la valve 50 n'étant plus soumise à l'action du fluide en provenance du conduit 45b, le tiroir revient en position médiane pour laquelle la pression est maintenue dans le conduit 37, ainsi que la position de serrage des pinces.

En fin d'usinage on actionne de nouveau le distributeur 48 qui revient à la première position ou rétablit l'alimentation dans le conduit 45 et on provoque l'inversion du tiroir de la valve 50 qui passe dans l'autre position pour laquelle le conduit 41 est relié au conduit 45c de pression et le conduit 37 est relié à la bâche par le conduit 89. Il en résulte que le fluide se trouvant dans la chambre 38 est évacué vers la bâche, alors que les chambres 51 et 15 sont alimentées en fluide sous pression par les con-duits 41a et 41b reliés au conduit 41.

Les pistons 12 et 13 sont repoussés (figure 3) l'un vers l'autre dans le sens inverse des flèches 39 et 40 et ils sont arrêtés dans leur course lorsqu'ils viennent en butée contre le circlips 42. Le recul des pistons, donc des cônes femelles 21 et 22, libère l'action radiale des pinces permettant ainsi le desserrage de la pièce. Des moyens non représentés sur le dessin sont mis en oeuvre pour opérer l'éjection de la pièce usinée 7 dans le sens de la flèche 43 et l'injection d'une pièce brute. Toutes ces opérations sont programmées par le cycle automatique du tour.

Bien que l'on ait représenté un circuit comprenant un joint rotatif, comportant un seul conduit de passage du fluide et une valve d'inversion, il serait également possible d'utiliser un joint rotatif comportant deux conduits de passage et un distributeur monté sur le boîtier de la poupée.

Dans le dispositif faisant l'objet de la présente invention et monté sur un tour à poupée centrale, le cycle automatique coordonne les fonctions séquentielles suivantes: chargement, serrage, usinage, desserrage, déchargement, etc., sans intervention manuelle de l'opérateur et sans arrêt en rotation de la broche 8.

Il est donc indispensable de disposer de moyens permettant de détecter si la pièce est bien desserrée pour effectuer le déchargement, puis le chargement de la pièce brute. D'autre part, il est aussi important de détecter le serrage de cette pièce brute avant d'effectuer l'usinage.

Il est bien entendu que ces moyens de détection 91, 91a sont prévus à chaque extrémité de la broche 8 (figures 2 et 3) pour vérifier que les deux pinces 23 et 24 sont respectivement en position de serrage ou de desserrage.

Afin de simplifier la description et les dessins, un seul des moyens de détection 91 sera décrit et représenté du fait que le moyen de détection 91a est identique et fonctionne de la même manière.

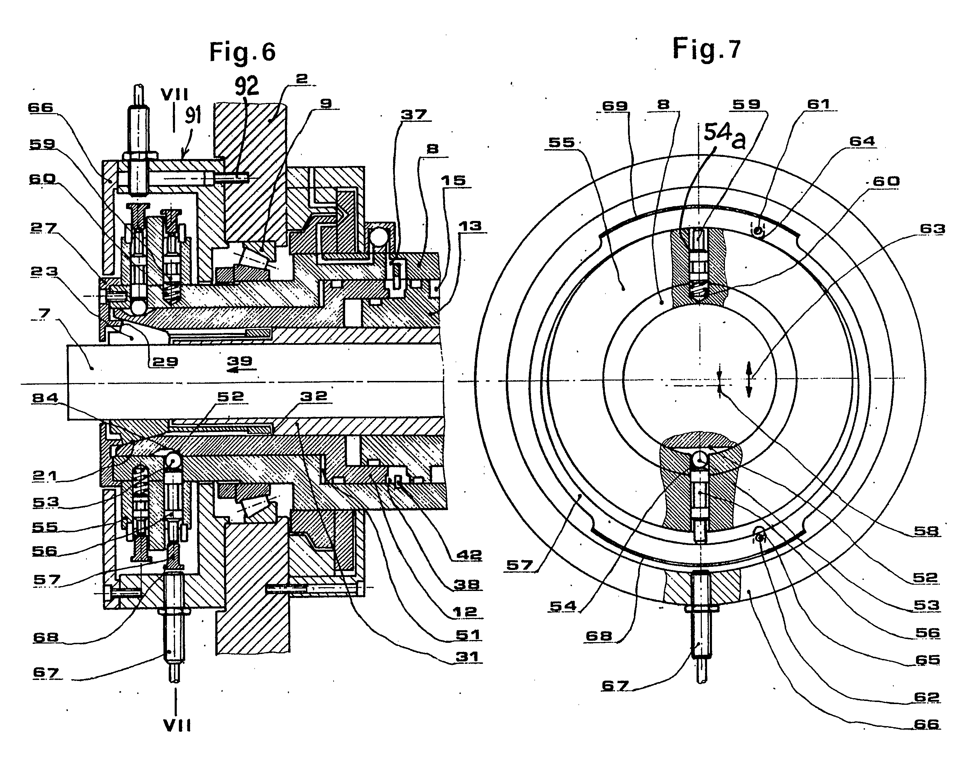

Aux figures 6 et 7 on a représenté le moyen de détection 91 qui comporte un boîtier 66, fixé au moyen de vis 92 sur le boîtier de la poupée 2 et dans lequel s'étend une extrémité de la partie gauche de la broche 8 portant une pièce annulaire ou douille 55 sur laquelle est montée une bague 57, solidaire en rotation de la broche et susceptible de se déplacer radialement dans le sens de la flèche 63 au moyen de tétons 61, 62 engagés dans des rainures 64, 65 aménagées dans la partie annulaire 55, et limitant le débattement de la bague 57.

Cette disposition permet une excentration de la bague 57 d'une distance 58. La bague 57 présente sur une certaine portion angulaire, un écran magnétique 68 coopérant lorsque la bague est en position excentrée avec un détecteur inductif 67 fixé sur le boîtier 66 et susceptible de transmettre une information au programme du cycle automatique de la machine lors du passage de l'écran 68 à chaque tour de la broche 8. Un faux écran 69 est également prévu sur la bague de manière diamétralement opposée à l'écran 68, afin d'assurer l'équilibrage dynamique de la bague 57.

Dans la partie de la broche 8 et de la douille 55 correspondant à la partie médiane de l'écran 68, il est prévu un trou 54 dans lequel sont montés coulissants un piston 56 et une bille 53 qui est en contact avec l'une des extrémités du piston 56 dont l'autre extrémité est en contact avec l'intérieur de la bague 57, ladite bille 53 étant en contact avec une rampe 52 d'un logement ménagé dans la paroi du piston 12, ladite rampe étant prolongée par une partie rectiligne 84.

Du côté diamétralement opposé au trou 54, il est prévu dans la broche et la douille, un trou 54a dans lequel est monté coulissant un piston 59 en appui d'un côté, contre l'intérieur de la bague 57, et soumis de l'autre côté à l'action d'un ressort de rappel 60 en appui contre le fond du trou 54a.

Lorsque la pince 23 est en position desserrée, la bille 53 se trouve sur la partie rectiligne 84 du piston 12 et la bague 57 est maintenue dans une position concentrique à la broche par le ressort de rappel 60. L'écran 68 se trouve alors dans une position où il n'exerce aucune action sur le champ d'induction du détecteur de serrage 67.

Dans le cas où l'on veut procéder au serrage de la pince 23, on agit sur le piston 12 de la manière décrite précédemment, afin de déplacer ce dernier dans le sens de la flèche 39. Au cours de ce déplacement du piston 12, la bille 53 vient en contact avec la rampe 52 et repousse le piston 56, ce qui a pour effet d'excentrer la bague 57 d'une distance 58 et d'amener l'écran 68 dans la champ inductif du détecteur 67 qui transmet une information au programme de la machine indiquant que la pince 23 est en position de serrage.

Une information semblable du moyen de détection de serrage 91a pour la pince 24, mise en série avec l'information du détecteur 67, autorise l'usinage de la pièce.

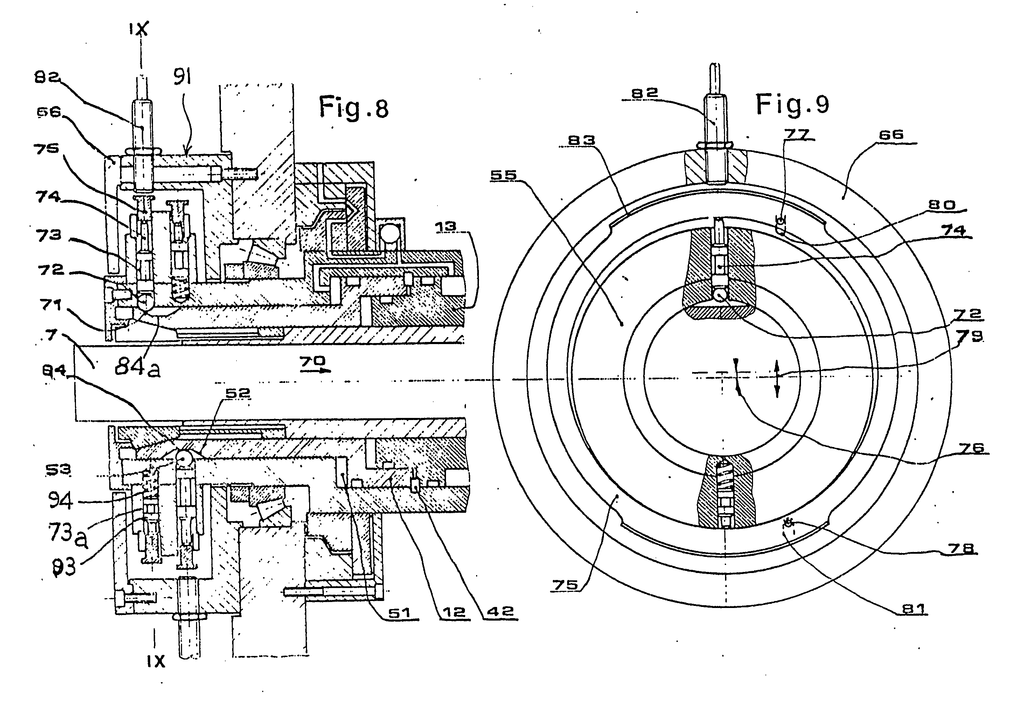

Aux figures 8 et 9 on a représenté le même moyen de détection 91 mais avec les organes de contrôle de desserrage en fonctionnement.

Ces organes de contrôle de desserrage sont identiques aux précédents, mais ils sont disposés parallèlement sur la pièce annulaire ou douille 55 et ils comprennent une bague 75 solidaire en rotation de la broche 8 et susceptibles de coulisser radialement suivant la flèche 79 d'une distance 76, des ergots 77 et 78 guidés dans des rainures 80, 81 de la douille 55 limitant le débattement de la bague 75.

La bague 75 comporte un écran magnétique 83 susceptible de coopérer avec le détecteur de desserrage 82 monté sur le boîtier 66 lorsque la bague 75 est en position excentrée.

Un trou 73 prévu dans la broche 8 et dans la douille 55 reçoit un piston 74 monté coulissant et en appui contre une bille 72 elle-même en contact avec une rampe 71 prolongée par une partie rectiligne 84a d'un logement prévu dans le piston 12.

A son autre extrémité, le piston 74 est en appui contre l'intérieur de la bague 75 dans la partie médiane de l'écran 83. Un trou 73a est également prévu de façon diamétralement opposée dans la douille 55 et la broche 8, ledit trou recevant un piston 93 coulissant en appui d'un côté, contre l'intérieur de l'anneau 75 et de l'autre côté, contre un ressort de rappel 94.

Lorsque la pince 23 est en position serrée, la bille 72 se trouve sur la partie rectiligne 84a du piston 12 et la bague 75 est maintenue dans une position concentrique à la broche par le ressort de rappel 94.

L'écran 83 se trouve alors dans une position où il n'exerce aucune action sur le champ d'induction du détecteur de desserrage 82.

Dans le cas où l'on veut procéder au desserrage de là pince 23, on agit sur le piston 12 de la manière décrite précédemment, afin de déplacer ce dernier dans le sens de la flèche 70. Au cours de ce déplacement du piston 12, la bille 72 vient en contact avec la rampe 71 et repousse le piston 73, ce qui a pour effet d'excentrer la bague 75 d'une distance 76 et d'amener l'écran 83 dans le champ inductif du détecteur de desserrage 82 qui transmet une information au programme de la machine indiquant que la pince 23 est en position de desserrage.

Une information semblable du moyen de détection de desserrage 91a pour la pince 24, mise en série avec l'information du détecteur 82 autorise le cycle de déchargement et de chargement de la pièce 7.

Pendant l'opération de desserrage décrite précédemment, le positionnement de la bague de serrage 57 a été modifié de la façon suivante:

Le piston 12 pendant le déplacement suivant le flèche 70, déplace la rampe 52 d'une valeur telle que la bille 53 quitte la rampe 52 pour occuper une position sur la partie rectiligne 84.

Le ressort 60 repousse la bague de serrage 57 par l'intermédiaire du piston 59. L'excentration 58 est annulée, la bague 57 redevient concentrique avec la broche 8 et l'écrou 68 quitte le champ magnétique du détecteur 67.

L'information de serrage est annulée au programme du tour.

Si l'on considère l'ensemble de ces mouvements du piston 12, il est évident que la disposition de l'information de serrage précède l'apparition de l'information de desserrage avec un temps mort entre ces deux points pour éviter une superposition. Il est aussi évident que le même phénomène décrit ci-dessus se produit dans le sens desserrage-serrage.

Bien entendu diverses modifications peuvent être apportées par l'homme de l'art aux dispositifs ou procédés qui viennent d'être décrits uniquement à titre d'exemples non limitatifs, sans sortir du cadre de l'invention.

## Revendications

1. Dispositif de serrage pour l'usinage interne et/ou externe simultané des deux extrémités d'une pièce, comprenant un boîtier de poupée (2) dans lequel est montée rotative une broche tubulaire (8) comportant intérieurement deux pistons annulaires (12, 13) coulissant axialement et agissant respectivement sur deux pinces de serrage (23, 24) de la pièce à usiner, disposées aux deux extrémités de la broche, les pinces de serrage qui sont montées respectivement dans les deux pistons présentant une partie conique (21, 22) coopérant avec une partie conique correspondante des pistons, lesdites pinces étant en appui à une extrémité de leur partie conique contre des couvercles (27, 28) solidaires de la broche par une face conique (29, 30) s'étendant radialement afin de permettre un serrage radial des pinces sur la pièce et une douille centrale (31) étant disposée à l'intérieur des pistons (12, 13), caractérisé en ce que les pinces présentent en outre une partie cylindrique et en ce que la douille constitue une entretoise contre les extrémités de laquelle viennent en butée en position desserrée les parties cylindriques (25, 26) des pinces (23, 24) qui sont centrées dans l'alésage des pistons (12, 13) de manière à assurer un guidage et un positionnement de la pièce dans les pinces.

2. Dispositif suivant la revendication 1, caractérisé en ce que les pistons (12, 13) sont commandés par un fluide hydraulique à partir d'une chambre annulaire centrale (38) ménagée entre les deux pistons (12, 13) afin d'amener les pinces (23, 24) en position de serrage et de deux chambres annulaires latérales (51, 15) ménagées entre chacun des pistons et la broche afin d'amener les pinces (23, 24) en position de desserrage, ladite chambre centrale (38) comportant intérieurement un organe de butée (42) délimitant la course des deux pistons.

3. Dispositif suivant la revendication 1, caractérisé en ce que la douille centrale (31) présente à ses deux extrémités des collerettes (31a, 31b) qui sont engagées dans des chambrages prévus sur la circonférence intérieure des pinces (23, 24), lesdites collerettes étant montées avec du jeu dans les chambrages de manière à permettre le mouvement radial des pinces.

4. Dispositif suivant les revendications 1 et 2, caractérisé en ce que les chambres centrales (38) et latérales (51, 15) de commande des pistons (12, 13) sont reliées sélectivement par une valve d'inversion (50) automatique et un dispositif de joint rotatif (49) à une source de fluide sous pression (44) et une bâche (88) sans pression, ladite valve d'inversion (50) étant commandée à partir d'un distributeur de fluide.

5. Dispositif suivant les revendications 1 et 2, caractérisé en ce qu'à chaque extrémité de la broche est disposé un moyen de détection (91, 91a) des positions de serrage et de desserrage des pinces.

6. Dispositif suivant la revendication 5, caractérisé en ce que chaque moyen de détection (91, 91a) des positions de serrage et de desserrage des pinces (23, 24) est constitué d'un boîtier (66) fixé sur le boîtier principal (2) et dans lequel s'étend une extrémité de la broche (8) sur laquelle est fixée une pièce annulaire (55) sur laquelle sont montées deux bagues (57, 75) solidaires en rotation de la broche et susceptibles de se déplacer radialement dont l'une par un moyen sensible au déplacement de la pince (23, 24) dans la position de serrage et dont l'autre par un moyen sensible au déplacement de la pince dans la position de desserrage, lesdites bagues (57, 75) présentant chacune un écran magnétique (68, 83) coopérant lorsque les bagues sont en position excentrée avec des organes de détection (67, 82) de la position de serrage et de desserrage de la pince.

7. Dispositif suivant la revendication 6, caractérisé en ce que, dans la pièce annulaire (55) solidaire de la broche et dans la broche, est monté coulissant un piston (56, 74) en contact à l'une de ses extrémités avec la partie de la bague (57, 75) située du côté de l'écran magnétique et, à l'autre extrémité, avec une bille (53, 72) se déplaçant radialement contre une rampe (52, 71) et une partie rectiligne du piston, ladite bague (57, 75) étant soumise du côté diamétralement opposé au piston à l'action d'un organe élastique (60, 94) de rappel en appui contre la broche.

8. Dispositif suivant les revendications 6 et 7, caractérisé en ce que les bagues (57, 75) portant l'écran magnétique (68, 83) présentent des ergots (61, 62) montés coulissants dans des rainures (64, 65) ménagées sur la pièce annulaire (55) solidaire de la broche.

## Patentansprüche

1. Spannvorrichtung zur gleichzeitigen inneren und/oder äußeren Bearbeitung beider Enden eines Werkstücks mit einem Spindelstockgehäuse (2), in welchem eine Rohrspindel (8) drehbar gelagert ist, die in ihrem Inneren zwei axial verschiebbare und jeweils auf zwei an den beiden Enden der Spindel angeordnete Zangen (23, 24) zum Einspannen des zu bearbeitenden Werkstücks wirkende Ringkolben (12, 13) aufweist, wobei die in den beiden Kolben gelagerten Spannzangen einen mit einem entsprechenden konischen Teil der Kolben zusammenwirkenden konischen Teil (21, 22) aufweisen, wobei sich die Zangen an einem Ende ihres konischen Teils gegen zur Spindel gehörige Kappen (27, 28) über eine sich radial erstreckende konische Fläche (29, 30) zwecks Bewirkens eines radialen Spannens der Zangen auf dem Werkstück abstützen, und mit einer im Inneren der Kolben (12, 13) angeordneten zentralen Hülse (31), dadurch gekennzeichnet, daß die Zangen außerdem einen zylindrischen Teil aufweisen und die Hülse ein Zwischenstück bildet, gegen dessen Enden die zylindrischen Teile (25, 26) der Zangen (23, 24) in entspannter Position zum Anschlag kommen, welche zylindrischen Teile in der Bohrung der Kolben (12, 13) so zentriert sind, daß sie eine Führung und Positionierung des Werkstücks in den Zangen gewährleisten.

2. Vorrichtung nach Anspruch 1, dadurch gekennzeichnet, daß die Kolben (12, 13) durch ein Hydraulikfluidum aus einer zwischen den beiden Kolben (12, 13) zum Bewegen der Zangen (23, 24) in die Spannposition angeordneten zentralen Ringkammer (38) und aus zwei zwischen jeweils einem Kolben und der Spindel zum Bewegen der Zangen (23, 24) in die Entspannposition angeordneten seitlichen Rindkammern (51, 15) gesteuert werden, wobei die zentrale Kammer (38) im Inneren ein Anschlagselement (42) zur Beschränkung des Weges der beiden Kolben umfaßt.

3. Vorrichtung nach Anspruch 1, dadurch gekennzeichnet, daß die zentrale Hülse (31) an ihren beiden Enden Flansche (31a, 31b) aufweist, die mit am inneren Umfang der Zangen (23, 24) vorgesehenen Senken in Eingriff stehen, wobei die Flansche mit Spiel so in den Senken gelagert sind, daß sie eine Radialbewegung der Zangen zulassen.

4. Vorrichtung nach den Ansprüchen 1 und 2, dadurch gekennzeichnet, daß die zentralen (38) und seitlichen (51, 15) Kammern zur Steuerung der Kolben (12, 13) selektiv über ein automatisches Umkehrventil (50) und eine Drehanschlußeinrichtung (49) an eine Druckfluidumquelle (44) und einen Behälter (88) ohne Druck angeschlossen sind, wobei das Umkehrventil (50) von einem Fluidumverteiler gesteuert wird.

5. Vorrichtung nach den Ansprüchen 1 und 2, dadurch gekennzeichnet, daß an jedem Ende der Spindel eine Einrichtung (91, 91a) zum Feststellen der Spann- bzw. Entspannposition der Zangen vorgesehen ist.

6. Vorrichtung nach Anspruch 5, dadurch gekennzeichnet, daß jede Einrichtung (91, 91a) zum Feststellen der Spann- bzw. Entspannposition der Zangen (23, 24) von einem am Hauptgehäuse (2) befestigten Gehäuse (66) gebildet ist, in welches sich ein Ende der Spindel (8) erstreckt, auf dem ein ringförmiges Stück (55) angeordnet ist, auf welchem zwei mit der Spindel in Rotation befindliche Ringe (57, 75) gelagert sind, von denen einer mit einem auf die Bewegung der Zange (23, 24) in die Spannposition reagierenden Element und der andere mit einem auf die Bewegung der Zange in die Entspannposition reagierenden Element radial verscheibbar ist, wobei die Ringe (57, 75) jeweils eine Magnetblende (68, 83) aufweisen, die bei exzentrischer Lage der Ringe mit Einrichtungen (67, 82) zum Feststellen der Spann- bzw. Entspannposition der Zange zusammenwirken.

7. Vorrichtung nach Anspruch 6, dadurch gekennzeichnet, daß im zur Spindel gehörigen ringförmigen Stück (55) und in der Spindel ein Kolben (56, 74) verschiebbar gelagert ist, der an einem seiner Enden mit dem auf der Seite der Magnetblende befindlichen Teil des Ringes (57, 75) und am anderen Ende mit einer sich radial gegen eine Rampe (52, 71) und einen geradlinigen Teil des Kolbens verschiebenden Kugel (53, 72) in Kontakt steht, wobei der Ring (57, 75) an der dem Kolben diametral gegenüberliegenden Seite der Wirkung eines federnden, sich gegen die Spindel abstützenden Rückziehelements (60, 94) unterliegt.

8. Vorrichtung nach den Ansprüchen 6 und 7, dadurch gekennzeichnet, daß die Ringe (57, 75) die Magnetblende (68, 83) tragende Stifte (61, 62) aufweisen, die in auf dem ringförmigen, zur Spindel gehörigen Stück (55) angebrachten Rillen (64, 65) beweglich gelagert sind.

**Claims**

1. A clamping device for simultaneously machining, internally and/or externally, the two ends of a workpiece, comprising a headstock housing (2) in which is mounted for rotating a tubular spindle (8) comprising internally two annular pistons (12, 13), sliding axially and acting respectively on two collets (23, 24) for clamping the workpiece, located at both ends of the spindle, the clamping collets which are respectively mounted in the two pistons having a cone-shaped portion (21, 22) cooperating with a corresponding cone-shaped portion in the pistons, the said collets resting at one end of their cone-shaped portion, against covers (27, 28) fast with the spindle, by means of a cone-shaped face (29, 30) extending radially in order to allow a radial tightening of the collets on the workpiece, and a central sleeve (31) being placed inside the pistons (12, 13) characterised in that the collets also have a cylindrical part and in that the sleeve constitutes a spacer against the ends of which abut the cylindrical parts (25, 26) of the collets (23, 24), so as to ensure a guiding and a positioning of the workpiece in the collets.

2. Device according to claim 1, characterised in that the pistons (12, 13) are controlled by a hydraulic fluid from a central annular chamber (38) provided between the two pistons (12, 13) in order to bring the collets (23, 24) in a clamping position, and from two lateral annular chambers (51, 15) providing between each piston and the spindle, in order to bring the collets (23, 24) in a loosening position, the said central chamber (38) comprising on the inside a stop member (42) limiting the travel of the two pistons.

3. Device according to claim 1, characterised in that the central sleeve (31) is provided at its two ends with flanges (31a, 31b) engaging counterborings provided on the internal circumference of the collets (23, 24), the said flanges being mounted with play in the counterborings so as to allow the radial movement of the collets.

4. Device according to claims 1 or 2, characterised in that the central (38) and lateral (51, 15) chambers controlling the pistons (12, 13) are connected selectively by an automatic reversing valve (50) and by a rotary joint device (49) to a source of pressurized fluid (44) and to a pressure-free tank (88), said reversing valve (50) being controlled from a fluid distributor.

5. Device according to claim 1, characterised in that each end of the spindle is provided with means (91, 91a) for detecting the clamping and loosening position of the collets.

6. Device according to claim 5, characterised in that each means (91, 91a) for detecting the clamping and loosening positions of the collets (23, 24) is composed of a housing (66) mounted on the main housing (2) and in which extends one end of the spindle (8) on which is secured an annular piece (55) on which are mounted two collars, (57, 75), fast in rotation with the spindle and adapted to move radially, one by a means sensitive to the movement of the collet (23, 24) in the clamping position, and the other by a means sensitive to the movement of the collet, in the loosening position, the said collars (57, 75) being each provided with a magnetic screen (68, 83) cooperating, when the collars are in an eccentric position, with members (67, 82) for detecting the clamping and loosening positions of the collet.

7. Device according to claim 6, characterised in that in the annular piece (55) fast with the spindle and in the spindle, is slidably mounted on a piston (56, 74) in contact at one of its ends with the portion of collar (57, 75) situated on the side of the magnetic screen and, at the other end, with a ball (53, 72) moving radially against a gradient (52, 71) and a rectilinear portion of the piston, the said collar (57, 75) being subjected on the side diametrically opposed to the piston to the action of a resilient return member (60, 94) resting against the spindle.

8. Device according to claims 6 or 7, characterised in that the collars (57, 75) supporting the magnetic screen (68, 83) are provided with pins (61, 62) slidably mounted in grooves (64, 65) provided on the annular piece (55) fast with the spindle.

Fig. 1

Fig. 2

Fig.3

**Fig.4**

**Fig.5**

# Fig.6

# Fig.7

Fig.8

Fig.9